# EUROPEAN PATENT APPLICATION

(11) **EP 2 141 466 A1**
(43) Date of publication of application: **06.01.2010**
(21) Application number: 09013415.6
(22) Date of filing: 20.09.2007
(51) Int. Cl.: G01F 23/26, G01F 23/00

(54) **Water level sensor, steam generator having the same, heating cooker having the steam generator and control method thereof**

(30) Priority: 08.01.2007 KR 20070002141
(62) Divisional of application: 07116819.9
(71) Applicant: Samsung Electronics Co., Ltd., Suwon-si, Gyeonggi-do 443-742 (KR)
(72) Inventor: Shon, Jong Chull, Suwon-si Gyeonggi-do (KR); Kim, Hyang Ki, Suwon-si Gyeonggi-do (KR); Jeon, Ki Suk, Seongnam-si Gyeonggi-do (KR)
(74) Representative: Grünecker, Kinkeldey, Stockmair & Schwanhäusser Anwaltssozietät

(57) **Abstract**

A water level sensor, a steam generator having the same, a heating cooker having the steam generator and a control method of the heating cooker implement embodiments of the present invention. The water level sensor stably senses the change of a water level regardless of the production of scales. The heating cooker includes a cooking chamber in which food is put; a steam container generating steam to supply the steam to the cooking chamber; a water supply supplying water into the steam container; a steam heater heating water in the steam container; a water level sensor installed in the steam container to sense a change of a water level in the steam container; and a controller controlling the water supply in accordance with the sensor output value of the water level sensor, wherein the water level sensor has one electrode rod to detect a change in electrostatic capacity in accordance with a change of a water level.

## Description

### BACKGROUND

### 1. Field

The present invention relates generally to a water level sensor, a steam generator having the same, a heating cooker having the steam generator, and a control method of the heating cooker, and more particularly to a water level sensor capable of stably sensing a change of a water level regardless of the production of scales, a steam generator having the water level sensor, a heating cooker having the steam generator, and a control method of the heating cooker.

### 2. Description of the Related Art

In general, a microwave oven using high-frequency waves, gas and electric ovens each using a burner or heater, and the like, are used as heating cookers for cooking foods.

Among these heating cookers, the gas or electric oven has disadvantages in that the food is oxidized by coming into contact with oxygen contained in the air because the gas or electric oven cooks food by directly applying heat onto the food. Therefore, the taste of the food is degraded, and the food is not healthy. In a case where a steamer is used, too much moisture is contained in food. Therefore, the specific taste of the food is degraded, and the cooking time is extended.

Further, in the case of the microwave oven that cooks the food by irradiating high-frequency waves onto the food, if the high-frequency waves are unevenly irradiated onto the food, the food is partially burned or underdone. That is, not only uniform cooking is difficult in the microwave oven, but also the food is dried, so that the taste of the food is degraded.

To solve these disadvantages of such conventional heating cookers, heating cookers (hereinafter, referred to as "steam ovens") for supplying heat to food through steam have been recently developed. If such steam ovens are used, appropriate moisture is maintained in food, so that the taste of the food can be maintained. Further, a cooking chamber fully filled with steam operates as an effective heat transfer medium, so that the cooking time can be reduced.

Such a steam oven generally includes a steam generator for generating and supplying steam by heating water, and a water supply for supplying water to the steam generator. The steam generator includes a steam container in which the steam is generated, and a steam heater for heating water supplied into the steam container. The water supply includes a water container and a water supply pump for transferring water stored in the water container to the steam container.

The water supply pump supplies a certain amount of water into the steam container, and then stops. The steam heater receives power and heats the water supplied into the steam container, thereby generating steam. The steam produced in such a manner is supplied into a cooking chamber. As the steam is supplied, the water in the steam container is reduced. If the water in the steam container is completely evaporated, the supply of the steam is suspended so that the food may not be properly cooked, and the steam heater is overheated so that the breakdown of a device or an accident may occur. For this reason, if the water level in the steam container is lowered to a certain level or less, water must be supplied into the steam container.

To this end, a water level sensor capable of sensing a water level is installed in the interior of the steam container such that the water supply can be automatically adjusted by allowing the water supply pump to be operated in accordance with a sensing signal of the water level sensor. Thus, for the purpose of the stable operation of the steam oven and the prevention of an accident, it is important to precisely sense a change of a water level within the steam container while steam is generated.

An electrostatic-capacity-type water level sensor having two or more electrode rods included in the steam container is generally used as the water level sensor. The two or more electrode rods include one reference electrode rod determining a referential electrostatic capacity of water, and at least one other electrode rod sensing electrostatic capacitance that is changed depending on a change of a water level. Accordingly, if water comes into contact between the electrode rods, the change of a water level is sensed by measuring a change in electrostatic capacitance.

However, a problem occurs in that scale, in accordance with the generation of steam, is produced in the interior of the steam container. Scale or scales are a hard incrustation usually rich in sulfate of calcium that is deposited on the inside of a vessel (as a boiler) in which water is heated. When the electrode rods are operated and have a scale buildup, water comes into contact between the electrode rods due to the water absorbed by the scale even though there is no water in the steam container because the scale has adhered to the electrode rods due to using them for a long period of time, thereby causing the electrode rods to sense the water absorbed by the scale erroneously as a water level increase in the steam container, so that a change of a water level cannot be precisely sensed. Such a malfunction prevents the stable operation of the entire steam oven.

Further, since at least two electrode rods are used, the volume of the water level sensor increases. Therefore, it is difficult to provide a compact water level sensor, and the costs of the water level sensor may increase proportionally with respect to the volume of the water level sensor.

### SUMMARY

Accordingly, the present invention solves the above-mentioned problems occurring in the prior art, and in an aspect of the present invention, the invention includes: a water level sensor that stably senses a change of a water level regardless of the production of scales, a steam generator having the water level sensor, a heating cooker having the steam generator, and a control method of the heating cooker.

To accomplish this aspect, according to an embodiment of the present invention, a water level sensor includes: a sensor support part installed in a container into which water is added; and a detector connected to the sensor support part to generate a sensing signal in accordance with a change of a water level, wherein the detector has one electrode rod to sense the water level of the container.

Further, the electrode rod senses a change of a water level in the container by detecting a change in an electrostatic capacity through contact with water.

Further, the water level sensor outputs a high-level (first) or low-level (second) value in accordance with a change in electrostatic capacity by grounding the electrode rod using an earth potential of the container or water.

According to another aspect of the present invention, there a steam generator includes: a steam container in which steam is generated; a water supply supplying water into the steam container; a steam heater heating water in the steam container; and a water level sensor installed in the steam container to sense a change of a water level in the steam container, wherein the water level sensor has one electrode rod to detect a change in electrostatic capacity in accordance with a change of a water level.

Further, the water level sensor outputs a high-level (first) or low-level (second) value in accordance with a change in electrostatic capacity by grounding the electrode rod using an earth potential of the steam container, water or the steam heater.

Further, a shielding rib preventing supplied water from being rapidly sprayed toward the water level sensor is provided in the interior of the steam container.

According to a further aspect of the present invention, a heating cooker includes: a cooking chamber into which food is put; a steam container generating steam to supply it to the cooking chamber; a water supply supplying water into the steam container; a steam heater heating water in the steam container; a water level sensor installed in the steam container to sense a change of a water level in the steam container: and a controller controlling the water supply in accordance with the sensor output value of the water level sensor, wherein the water level sensor has one electrode rod to detect a change in electrostatic capacity in accordance with a change of a water level.

Further, the controller controls the water supply operation of the water supply by determining whether or not a supply of water in the steam container is low in accordance with the sensor output value of the water level sensor.

Further, in a case where water is sensed in the water level sensor through the water supply operation of the water supply, the controller controls an amount of water supply by additionally supplying water for a predetermined time from a time point of sensing the water.

According to a still further aspect of the present invention, a control method of a heating cooker includes: supplying water needed to generate steam into a steam container; generating steam from the water supplied into the steam container and supplying the steam into a cooking chamber; sensing the water level of the steam container, which is changed in accordance with the generation of steam, in a water level sensor having one electrode rod; and controlling a water supply in accordance with the sensor output value of the water sensor such that the water level of the steam container is maintained at a predetermined water level.

Further, the operation of sensing the water level of the steam container detects a change in electrostatic capacity in accordance with a change of a water level in the water level sensor having the electrode rod so as to output a high-(first) or low-level (second) sensor output value.

Further, the operation of sensing the water level of the steam container outputs a high-(first) or low-level (second) sensor output value in accordance with a change in electrostatic capacity by grounding the electrode rod using an earth potential of the steam container or water.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a perspective view illustrating a heating cooker having a steam generator in accordance with an embodiment of the present invention;
FIG. 2 is an exploded perspective view illustrating a configuration of the steam generator having a water level sensor according to an embodiment of the present invention;
FIG. 3 is a view illustrating a structure in which the steam generator having the water level sensor is coupled to the heating cooker according to an embodiment of the present invention;
FIG. 4 is a control block diagram of the heating cooker having the steam generator in accordance with an embodiment of the present invention; and
FIG. 5 is a flowchart illustrating an operation of water level control in accordance with the generation of steam in a heating cooker having a steam generator in accordance with an embodiment of the present invention.

### DETAILED DESCRIPTION OF THE EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

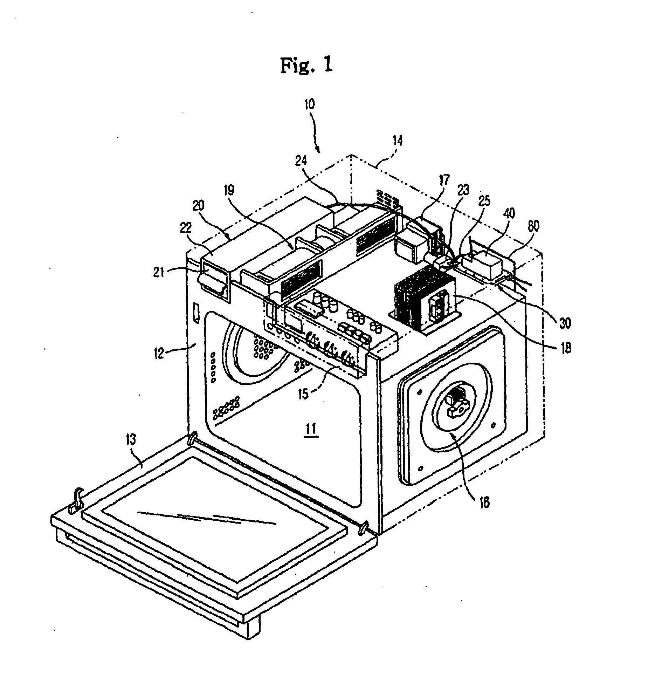

FIG. 1 is a perspective view illustrating a heating cooker having a steam generator in accordance with an embodiment of the present invention.

In FIG. 1, the heating cooker 10 having a steam generator of the present invention includes a body 12 provided with a cooking chamber 11; a cover 14 covering a top, both sides and a rear of the body 12; convection heaters 16 respectively mounted on both side surfaces of the body 12 to heat the cooking chamber 11; a magnetron 17 generating microwaves and oscillating the generated microwaves to the cooking chamber 11; and a steam generator 30 generating steam and supplying the generated steam to the cooking chamber 11.

A front of the body 12 is opened such that food may be put in/pulled out of the body 12, and the cooking chamber 11 is opened/closed by a door 13 attached at the front of the body 12. An electrical component chamber, in which various components constituting the heating cooker may be mounted, is formed between the top of the body 12 and the cover 14 covering it. A control unit 15 for a user operation is provided at an upper portion of the front of the body 12, and a water supply 20 for supplying water to the steam generator 30 is mounted next to the control unit 15.

The water supply 20 includes a water container 21 storing water therein and a water supply pump 23 supplying water to the steam generator 30. The water container 21 is installed to be attachable/detachable to a water container case 22 mounted on the top of the body 12, and the water supply pump 23 is connected to the water container 21 and the steam generator 30 through a water supply tub 24 and a water supply connection tube 25. An air blower 19 is mounted next to the water supply 20 on the top of the body 12. The air blower 19 sends air to cool down the various components mounted on the top of the body 12.

The convection heaters 16 respectively mounted on both the side surfaces of the body 12 and the magnetron 17 mounted on a rear portion of the top of the body 12 are known to those skilled in the art. The convection heaters 16 and the magnetron 17 supply heat or microwaves into the cooking chamber 11 so as to cook food put in the cooking chamber 11. The convection heater 16 includes a heater (not shown) and a circulating fan (not shown). Further, the convection heater 16 circulates air heated by the heater in the cooking chamber 11. The magnetron 17 receives a high voltage input from a high-voltage transformer 18 and generates microwaves so as to oscillate the generated microwaves to the cooking chamber 11 through a waveguide (not shown) coupled to the cooking chamber 11 at the rear thereof.

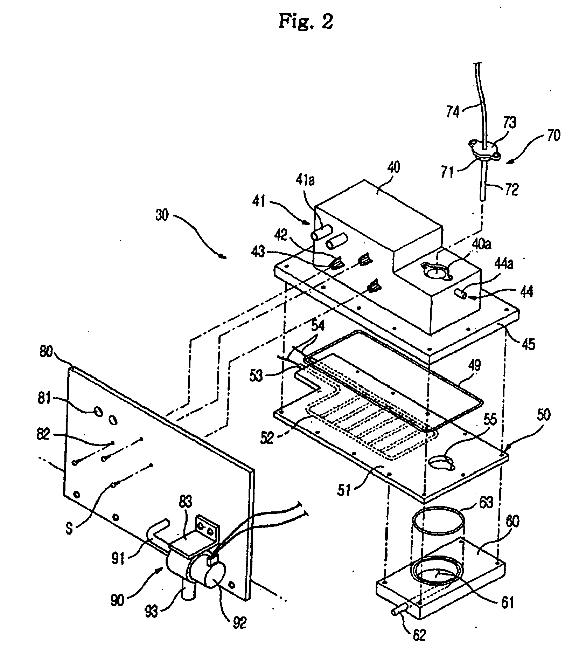

The steam generator 30 is coupled to a support bracket 80 provided at a rear portion of the top of the body 12. The steam generator 30 is connected to the water supply 20 and a water drainage 90 (FIG. 2) to facilitate movement of water.

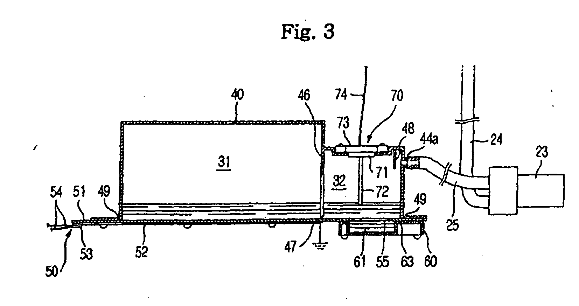

FIG. 2 is an exploded perspective view illustrating a configuration of the steam generator having a water level sensor according to an embodiment of the present invention, and FIG. 3 is a view illustrating a structure in which the steam generator having the water level sensor is coupled to the heating cooker according to an embodiment of the present invention.

In FIGS. 2 and 3, the steam generator 30 includes a steam container 40; a steam heater 50 coupled to the steam container 40 beneath a bottom surface thereof; a water drainage guide member 60 coupled to the steam heater 50 at one side thereof; and a water level sensor 70 coupled to the steam generator 30 at one side thereof.

A steam exhaust part 41 from which steam generated from the interior of the steam container 40 and a plurality of fixing members 42, each having a screw hole 43, are provided at one side of the steam container 40. A water supply part 44 for supplying water to the interior of the steam container 40 is provided at another side thereof. The steam exhaust part 41 includes steam exhaust ports 41 a protruding from the steam container 40. Further, each of the steam exhaust ports 41 a is connected to a steam supply tube (not shown) to exhaust steam generated from a steam chamber 31 to the cooking chamber 11. The water supply part 44 includes a water supply port 44a protruding to the outside of the steam container 40. Further, the water supply part 44 is connected to the water supply pump 23 through the water supply connection tube 25. A heater cover part 45 surrounding the steam heater 50 is provided to extend downward around the bottom of the steam container, and a mounting hole 40a through which the water level sensor 70 is coupled to the steam container 40 is provided at one portion of a top of the steam container 40.

The steam heater 50 includes a heating plate 51 adhered closely to the steam container 40, and a heating element 52 provided at the bottom surface of the heating plate 51 and connected to a terminal part 53 through which a power line 54 for supplying power is coupled to the heating element 52. A sealing member 49 for preventing water of the steam chamber 31 and a water level sensing chamber 32 from being leaked to the outside is interposed between the heating plate 51 and the steam container 40. The heating element 52 is a resistor generating heat if the heating element 52 receives input power. The heating element 52 is provided at only one portion of the heating plate 51 positioned at the bottom surface of the steam chamber 31. A water drainage hole 55 for draining water of the water level sensing chamber 32 therethrough is provided at one side of the heating plate 51 that is positioned at a bottom surface of the water level sensing chamber 32.

The water drainage guide member 60 is coupled to a bottom surface of the steam heater 50 positioned at the bottom surface of the water level sensing chamber 32. A water drainage chamber 61 is located in the water drainage guide member 60. The water drainage chamber 61 is connected to the water level sensing chamber 32 through the water drainage hole 55 located at the one side of the heating plate 51 that is positioned at the bottom surface of the water level sensing chamber 32. Further, the water drainage chamber 61 is connected to a water drainage port 62 connected to the outside, and the water drainage port 62 is connected to the water drainage 90 coupled to the support bracket 80.

The water drainage 90 includes a water drainage connection tube 91 connected to the water drainage port 62, a water drainage valve 92 controlling a water drainage operation, and a water drainage tube 93 connected to the water drainage valve 92 to drain water moved through the water drainage connection tube 91. The water drainage valve 92 is fixed to a valve support member 83 coupled to the support bracket 80. Water in the water level sensing chamber 32 is drained to the water drainage 90 through the water drainage hole 55, the water drainage chamber 61 and the water drainage port 62. A sealing member 63 for preventing a water leakage is interposed around the water drainage chamber 61 between the water drainage guide member 60 and the heating plate 51. The steam container 40, the steam heater 50 and the water drainage guide member 60 are screw-coupled to one another.

The steam generator 30 configured as described above is screw-coupled to the support bracket 80 located at the top of the body 12 such that the water drainage hole 55 is inclined to be positioned lower than the terminal part 53. A plurality of fixing holes 82 respectively corresponding to the plurality of fixing members 42 are located on the support bracket 80. The steam generator 30 is fixed to the support bracket 80 by allowing a plurality of fixing screws S to be respectively inserted into the screw holes 43 of the fixing members 42 through the fixing holes 82. At this time, the steam exhaust ports 41 are respectively inserted into through-holes 81 provided on the support bracket 80, and the water drainage port 62 is inserted into the water drainage connection tube 91.

In FIG. 3, a partition wall 46 is provided in the interior of the steam container 40. The partition wall 46 partitions the interior of the steam container 40 into the steam chamber 31, in which steam is generated, and the water level sensing chamber 32, in which the water level sensor 70 is installed and the water supply port 44a is connected to the water supply connection tube 25. A flow path 47 through which water may be moved is located between the steam chamber 31 and water level sensing chamber 32 partitioned by the partition wall 46. Water supplied into the water level sensing chamber 32 through the water supply port 44a moves into the steam chamber 31 through the flow path 47. A shielding rib 48 is provided in front of the water supply port 44a in the interior of the water level sensing chamber 32. The shielding rib 48 prevents water supplied through the water supply port 44a from being rapidly sprayed toward the water level sensor 70 installed in the interior of the water level sensing chamber 32.

The water level sensor 70 is an electrostatic-capacity-type water level sensor that transmits signals by reacting to water possessing a predetermined electrostatic capacity. Further, the water level sensor 70 is a switching element that senses a change of a water level through contact or proximity with water in the interior of the steam container 40.

The water level sensor 70 includes a body 71; one electrode rod 72 attached to the body 71 to detect electrostatic capacitance in accordance with a change of a water level; and a sensor supporting part 73 connected to the body 71 and having a plurality of fixing screws for fixing the water level sensor 70 to the steam container 40 inserted into the sensor supporting part 73. Since the electrode rod 72 has an induction electrode, the electrode rod 72 directly or indirectly detects contact with water and transmits the change in electrostatic capacity to the following controller through a cable 74. At this time, the grounding of the electrode rod 72 is induced by means of the minute ground of water itself, or the earth potential of the steam container 40 or the steam heater 50. Further, the electrode rod 72 does not sense a quantitative change of water in accordance with a minute change in electrostatic capacity by outputting a high-level (first) signal in a case where water exists and outputting a low-level (second) signal in a case where no water exists. Instead, the electrode rod 72 senses the reach of water up to a first water level (a predetermined minimum water level at a time point when water must be again supplied because water in a steam container is determined to be low).

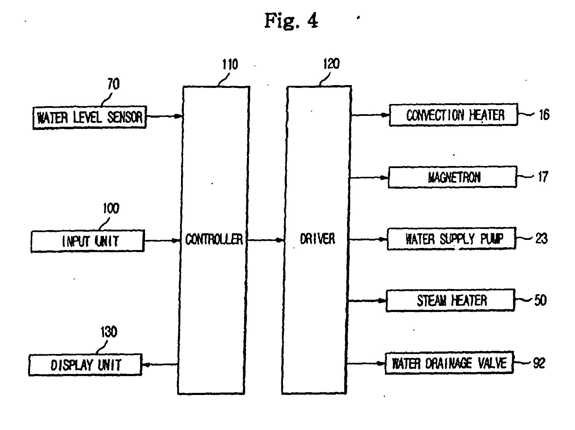

FIG. 4 is a control block diagram of the heating cooker having the steam generator in accordance with an embodiment of the present invention. The heating cooker having the steam generator of an embodiment of the present invention includes a water level sensor 70, an input unit 100, a controller 110, a driver 120 and a display unit 130.

The input unit 100 includes the control unit 15 having a plurality of keys such that a user inputs desired information (cooking time, cooking menu, cooking start/stop and the like) to the controller 110.

The controller 110 is a microcomputer controlling respective devices of the heating cooker in accordance with cooking information input from the input unit 100. The controller 110 determines whether or not water in the steam container 40 is short in accordance with a high (first) or low (second) sensor output signal transmitted through the water level sensor 70.

At this time, the controller 110 determines time for supplying water by identifying a signal output value of the water level sensor 70. If a low level of water is sensed in the water level sensor 70, the controller 110 controls water supply to be performed through the operation of the water supply pump 23. If the water supply is performed and a first water level (a predetermined minimum water level required in generating steam) is sensed in the water level sensor 70 through a change in electrostatic capacity, the controller 110 calculates the operation time of the water supply pump 23 from a time point when the first water level is sensed such that water is added up to a second water level (a predetermined maximum water level) by additionally supplying water for a first time (a time for supplying water up to a level at which the water reaches the predetermined maximum water level).

The driver 120 drives the magnetron 17, a cooling fan (not shown), the steam heater 50, the water supply pump 23, the circulating fan (not shown), the convention heaters 16 and the like in accordance with driving control signals of the controller 110. The display unit 130 displays cooking time, cooking menu, the operational state of the heating cooker and the like in accordance with display control signals of the controller 110.

Hereinafter, a water level sensor, a steam generator having the same and a heating cooker having the steam generator, which are configured as described above, and the process and advantages of a control method of the heating cooker will be described.

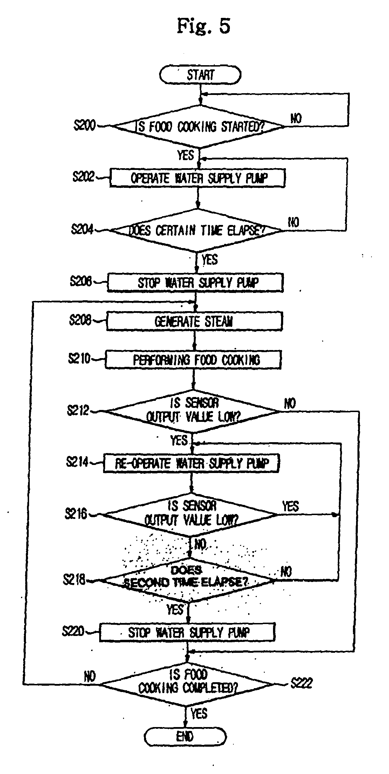

FIG. 5 is a flowchart illustrating an operation of water level control in accordance with the generation of steam in a heating cooker having the steam generator in accordance with an embodiment of the present invention.

If a user selects desired cooking information (food cooking using steam) by putting food in the cooking chamber 11 and operating the input unit 100, the cooking information selected by the user is input to the controller 110 through the input unit 100.

Accordingly, the controller 110 controls cooking of food in accordance with the input cooking information. The controller 110 determines whether the food cooking starts (S200).

If the food cooking is started, the controller 110 initiates operation of the water supply pump 23 such that water in the water container 21 flows into the water level sensing chamber 32 of the steam generator 30 through the water supply port 44a, and the water that flows into the water level sensing chamber 32 is supplied into the steam chamber 31 through the flow path 47 (S202).

At this time, the controller 110 counts the operation time of the water supply pump 23 to determine whether or not a predetermined time has elapsed such that a proper amount of water has been supplied into the steam container 40 (S204). If the predetermined time has elapsed, the controller 110 stops operation of the water supply pump 23 (S206).

If water is supplied into the steam chamber 31, the controller 110 applies power to the heating element 52 of the steam heater 50 such that the water that has flowed into the steam chamber 31 is heated. Accordingly, steam is generated in the steam chamber 31, and the generated steam is exhausted through each of the steam exhaust ports 41 a and is supplied into the cooking chamber 11 through the steam supply tube (not shown) (S208).

At this time, the controller 110 initiates operation of the convection heaters 16 for the purpose of the generation of overheated steam, and thus, the food cooking, so that the food put in the cooking chamber 11 is cooked while the steam in the cooking chamber 11 is overheated (S210).

As such, if a water level is lowered due to the evaporation of water in the steam chamber 31 and the water level sensing chamber 32 while the steam heater 50 is operated, the lowered water level is sensed by the water level sensor 70, thereby generating a high-(first) or low-level (second) signal.

In the method of sensing a change of a water level in the water level sensor 70, since the electrode rod 72 of the water level sensor 70 has an induction electrode, electrostatic capacitance in accordance with the change of a water level is detected through the electrode rod 72. The method is an electrostatic capacity method in which a signal is transmitted by reacting to water possessing a predetermined electrostatic capacity.

In general, the electrostatic capacity method is based on the fact that a substance necessarily has a dielectric constant higher than vacuum (or air). The dielectric constant represents a property for the dielectric polarization of a substance, in which substances necessarily have properties that conserve electrical energy. The dielectric constant is one of the electrical constants possessed by insulating substances. If such an electrostatic capacity method is applied to the water level sensor 70, the water level sensor 70 is operated by sensing contact with water having a high dielectric constant. For this reason, the water level sensor 70 can obtain a stable signal. In a conventional water level sensor having two or more electrode rods, since the state that water exists is sensed due to the production of scale connected between the electrode rods even in the state that no water exists therebetween, a malfunction occurs. This is due to water being absorbed by the scale like lime if water comes into contact with the scale. Thus, since water comes into contact between the electrode rods due to water absorbed by the scale, the water absorbed by the scale is erroneously sensed as a change of a water level.

However, since the water level sensor 70 of the present invention has one electrode rod 72, a malfunction does not occur unless water comes into contact with the electrode rod 72, although scale is deposited and grown on the electrode rode 72. That is, if the electrode rod 72 is isolated from water, although moisture remains in the scale, a malfunction does not occur.

The electrostatic capacitance in accordance with a change of a water level of the steam chamber 31 and the water level sensing chamber 32 is detected through such a structure of the water level sensor 70. Thus, a high-level (first) signal is output in a case where water exists, and a low-level (second) signal is output in a case where no water exists. A sensor output value that does not sense a quantitative change of water but senses the reach of water up to a first water level (a predetermined minimum water level required in generating steam) is transmitted to the controller 110 through the cable 74.

Accordingly, the controller 110 determines whether or not the transmitted sensor output value is low (S212). In a case where the sensor output value is low, i.e., where water in the steam container 40 remains below the first water level, the controller 110 determines that a water level in the steam container is low. Then, the controller 110 re-operates the water supply pump 23 such that water is supplied into the steam container 40, thereby supplying water into the steam chamber 31 and the water level sensing chamber 32 (S214).

As such, if a water level is raised because water is supplied into the steam chamber 31 and the water level sensing chamber 32 in accordance with the re-operation of the water supply pump 23 while the steam heater 50 is operated, the electrode rod 72 of the water level sensor 70 detects the electrostatic capacitance in accordance with a change of a water level to transmit a high- (first) or low-level (second) sensor output value to the controller 110.

Accordingly, the controller 110 determines once again whether or not the transmitted sensor output value is low (S216). In a case where the sensor output value is low, the controller 110 determines that a water level in the steam container 40 is low and returns to the operation S214. While continuously controlling the water supply pump 23 being operated, the controller 110 causes water to be continuously supplied into the steam chamber 31 and the water level sensing chamber 32, and checks whether or not the sensor output value is changed.

Meanwhile, in a case where the sensor output value is not low as the result of the operation S216, water required in generating steam is supplied up to the first water level in the steam container 40. Therefore, the controller 110 counts the operation time of the water supply pump 23 from a time point when the first water level is sensed so as to determine whether or not the counted time exceeds a predetermined second time (a predetermined time for supplying water up to a water level that becomes the predetermined maximum water level) elapsed (S218).

In a case where the counted time does not exceed the second time, the controller 110 increases the water supply up to a second water level (a predetermined maximum water level) by additionally supplying water for the second time. In a case where the counted time exceeds the second time, the controller 110 stops operation of the water supply pump 23 such that supplying water is stopped (S220).

As such, while the cooking of food is performed by generating steam through the operation of the steam heater 50, the water level of water in the steam chamber 31 and the water level sensing chamber 32 is stably sensed in the water sensor 70 having the electrode rod 72 regardless of the production of scale. Therefore, water required in generating steam is maintained at a proper water level in the steam chamber 31 and the water level sensing chamber 32.

After that, the controller 110 determines whether or not the food cooking in accordance with the generation of steam is completed (S222). If the food cooking is completed, power supplied to the steam heater 50 is cut off, and the water drainage valve 92 is opened such that water in the steam chamber 31 and the water level sensing chamber 32 is drained to the outside. Then, the operation of the steam heater 50 is ended.

Meanwhile, unless the food cooking is not completed, the water level of water in the steam chamber 31 and the water level sensing chamber 32 is changed as the food cooking is performed by generating steam. For this reason, the controller 110 returns to the operation S208 and controls the changed water level that is stably sensed in the water level sensor 70, so that a proper amount of water required in generating steam is always maintained in the steam chamber 31 and the water level sensing chamber 32.

As described above, in a water level sensor, a steam generator having the same, a heating cooker having the steam generator and a control method of the heating cooker according to the present invention, there is an advantage in that a water level sensor having one electrode rod is installed in a steam container storing water required in generating steam therein, so that a change of a water level is stably sensed regardless of the production of scale.

The invention can also be constituted by the following embodiments:
1. A water level sensor 70, comprising:
   a sensor support part 73 installed in a container 40 into which water is supplied; and
   a detector connected to the sensor support part 73 to generate a sensing signal in accordance with a change of a water level,
   wherein the detector has one electrode rod 72 to sense the water level of the container 40.
2. The water level sensor 70 as identified in embodiment 1, wherein the electrode rod 72 senses the change of the water level in the container 40 by detecting a change in electrostatic capacity through contact with water.
3. The water level sensor 70 as identified in embodiment 2, wherein the water level sensor 70 outputs a first or second value in accordance with a change in electrostatic capacity by grounding the electrode rod 72 using an earth potential of the container 40 or water.
4. A steam generator 30, comprising:
   a steam container 40 in which steam is generated;
   a water supply 20 supplying water into the steam container 40;
   a steam heater 50 heating water in the steam container 40; and
   a water level sensor 70 installed in the steam container 40 to sense a change of a water level in the steam container 40,
   wherein the water level sensor 70 has one electrode rod 72 to detect a change in electrostatic capacity in accordance with the change of the water level.
5. The steam generator 30 as identified in embodiment 4, wherein the water level sensor 70 outputs a first or second value in accordance with the change in electrostatic capacity by grounding the electrode rod 72 using an earth potential of the steam container 40, water or the steam heater 50.
6. The steam generator 30 as identified in embodiment 4, wherein a shielding rib 48 is provided in an interior of the steam container 40 so as to prevent supplied water from being rapidly sprayed toward the water level sensor 70.
7. A heating cooker, comprising:
   a body 12 having a cooking chamber 11;
   a cover 14 covering a top, both sides and a rear of the body 12;
   convection heaters 10 respectively mounted on both side surfaces of the body 12 to heat the cooking chamber 11;
   a magnetron 17 generating microwaves and oscillating the generated microwaves to the cooking chamber 11;
   a steam generator 30 generating steam and supplying the generated steam to the cooking chamber; and
   a water level sensor 70 coupled at one side of the steam generator 30,
   wherein the water level sensor 70 is an electrostatic-capacity-type water level sensor that transmits signals by reacting to water possessing a predetermined electrostatic capacity.
8. The heating cooker of embodiment 7, wherein the water level sensor 70 is a switching element that senses a change of a water level through contact or proximity with water in the interior of the steam container 40.
9. The heating cooker of embodiment 7, wherein the water level sensor 70 includes:
   a body 71;
   one electrode rod 72 attached to the body 71 to detect electrostatic capacitance in accordance with a change of a water level; and
   a sensor supporting part 73 connected to the body 71 and having a plurality of fixing screws to fix the water level sensor 70 to the steam container 40 inserted into the sensor supporting part 73.

Although exemplary embodiments of the present invention have been described for illustrative purposes, those skilled in the art will appreciate the various modifications, additions and substitutions are possible, without departing from the scope of the invention as disclosed in the accompanying claims.

## Claims

1. A heating cooker (10), comprising:
a cooking chamber (11) into which food is put;
a steam container (40) generating steam to supply the steam to the cooking chamber (11);
a water supply (20) supplying water into the steam container (40);
a steam heater (50) heating water in the steam container (40);
a water level sensor (70) installed in the steam container (40) to sense a change of a water level in the steam container (40); and
a controller (110) controlling the water supply (20) in accordance with a sensor output value of the water level sensor (70),
wherein the water level sensor (70) has one electrode rod to (72) detect a change in electrostatic capacity in accordance with a change of a water level.

2. The heating cooker as claimed in claim 1, wherein the water level sensor (70) outputs a first or second value in accordance with the change in electrostatic capacity by grounding the electrode rod (72) using an earth potential of the steam container (40), water or the steam heater (50).

3. The heating cooker as claimed in one of the preceding claims, wherein the controller (110) controls a water supply operation of the water supply (20) by determining shortage of water in the steam container (40) in accordance with the sensor output value of the water level sensor (70).

4. The heating cooker as claimed in claim 3, wherein, in a case where water is sensed by the water level sensor (70) through the water supply operation of the water supply (20), the controller (110) controls an amount of water supply by additionally supplying water for a predetermined time from a time point of sensing water.

5. The heating cooker as claimed in one of the preceding claims, wherein the electrode rod (72) senses a reach of water up to a predetermined minimum water level at a time point when water is to again be supplied, and the water level sensor (70) outputs a sensor output signal to a controller (110), which determines whether to supply more water to the steam container (40).

6. A control method of a heating cooker, the method comprising:
supplying water needed to generate steam into a steam container (40);
generating steam from the water supplied into the steam container (40) and supplying the steam into a cooking chamber (11);
sensing a water level of the steam container (40), which is changed in accordance with generation of the steam, using a water level sensor (70) having one electrode rod (72); and
controlling a water supply (20) in accordance with the output value of the water sensor (70) such that the water level of the steam container (40) is maintained at a proper water level.

7. The control method as claimed in claim 6, wherein, in the sensing the water level of the steam container (40), the water level sensor (70) having one electrode rod (72) detects a change in electrostatic capacity in accordance with the change of the water level, thereby outputting a first or second output value.

8. The control method as claimed in claim 7, wherein, in the sensing the water level of the steam container (40), the first or second output value is output in accordance with the change in electrostatic capacity by grounding the electrode rod (72) using an earth potential of the steam container (40) or water.
